# EUROPEAN PATENT SPECIFICATION

(11) **EP 1 262 042 B1**
(45) Date of publication and mention of the grant of the patent: **14.01.2009**
(21) Application number: 01920196.1
(22) Date of filing: 02.03.2001
(51) Int. Cl.: H04L 12/437

(54) **ROUTING SWITCH FOR DYNAMICALLY REROUTING TRAFFIC DUE TO DETECTION OF FAULTY LINK**
ROUTENSCHALTER FÜR DYNAMISCHE VERKEHRSUMLEITUNG AUFGRUND VON VERBINDUNGSFEHLERERKENNUNG
COMMUTATEUR DE ROUTAGE DESTINE AU REACHEMINEMENT DU TRAFIC DU A LA DETECTION D'UNE LIAISON DEFAILLANTE

(30) Priority: 03.03.2000 US 518792
(43) Date of publication of application: 04.12.2002
(73) Proprietor: Luminous Networks, Inc., Cupertino, CA 95014 (US)
(72) Inventor: KALMAN, Robert, F., Cupertino, CA 95014 (US); FAN, Jason, C., Mountain View, CA 94043 (US); BARRY, Charles, F., Campbell, CA 95008 (US); JOGALEKAR, Prasad P, Sunnyvale, CA 94086 (US)
(74) Representative: Hitchcock, Esmond Antony
(86) International application number: PCT/US2001/006956
(87) International publication number: WO 2001/067685

(56) References cited:
- US-A- 4 527 270
- US-A- 5 793 746

## Description

### FIELD OF THE INVENTION

This invention relates to communication networks and, in particular, to networks employing rings.

### BACKGROUND

As data services become increasingly mission-critical to businesses, service disruptions become increasingly costly: A type of service disruption that is of great concern is span outage, which may be due either to facility or equipment failures. Carriers of voice traffic have traditionally designed their networks to be robust in the case of facility outages, e.g. fiber breaks. As stated in the Telcordia GR-253 and GR-499 specifications for optical ring networks in the telecommunications infrastructure, voice or other protected services must not be disrupted for more than 60 milliseconds by a single facility outage. This includes up to 10 milliseconds for detection of a facility outage, and up to 50 milliseconds for rerouting of traffic.

A significant technology for implementing survivable networks meeting the above requirements has been SONET rings. A fundamental characteristic of such rings is that there are one (or more) independent physical links connecting adjacent nodes in the ring. Each link may be unidirectional, e.g. allow traffic to pass in a single direction, or may be bi-directional. A node is defined as a point where traffic can enter or exit the ring. A single span connects two adjacent nodes, where a span consists of all links directly connecting the nodes. A span is typically implemented as either a two fiber or four fiber connection between the two nodes. In the two fiber case, each link is bi-directional, with half the traffic in each fiber going in the "clockwise" direction (or direction 0), and the other half going in the "counterclockwise" direction (or direction 1 opposite to direction 0). In the four fiber case, each link is unidirectional, with two fibers carrying traffic in direction 0 and two fibers carrying traffic in direction 1. This enables a communication path between any pair of nodes to be maintained on a single direction around the ring when the physical span between any single pair of nodes is lost. In the remainder of this document, references will be made only to direction 0 and direction 1 for generality.

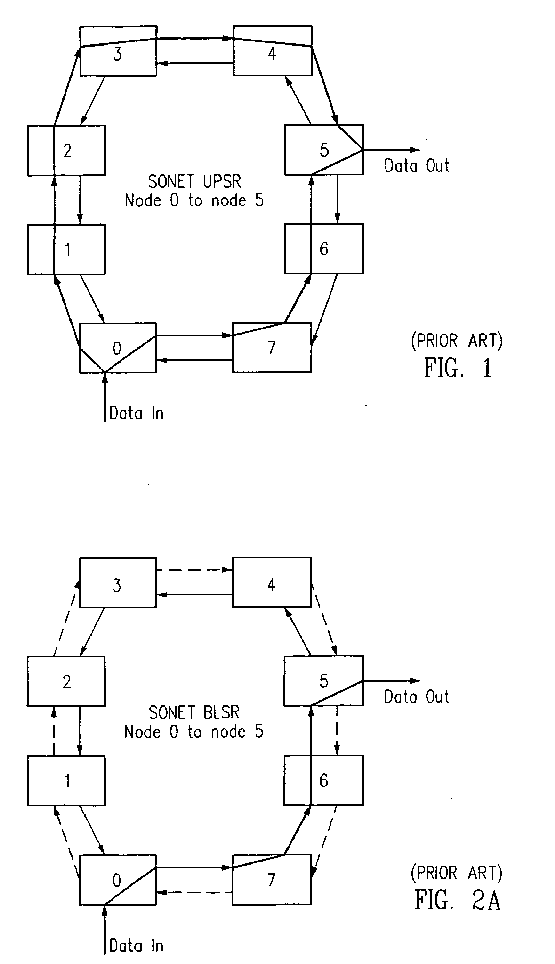

There are 2 major types of SONET rings: unidirectional path-switched rings (UPSR) and bi-directional line-switched rings (BLSR). In the case of UPSR, robust ring operation is achieved by sending data in both directions around the ring for all inter-node traffic on the ring. This is shown in Fig. 1. This figure shows an N-node ring made up of nodes (networking devices) numbered from node 0 to node N-1 and interconnected by spans. In this document, nodes are numbered in ascending order in direction 0 starting from 0 for notational convenience. A link passing traffic from node i to node j is denoted by dij. A span is denoted by sij, which is equivalent to sji. In this document, the term span will be used for general discussion. The term link will be used only when necessary for precision. In this diagram, traffic from node 0 to node 5 is shown taking physical routes (bold arrows) in both direction 0 and direction 1. (In this document, nodes will be numbered sequentially in an increasing fashion in direction 0 for convenience. Node 0 will be used for examples.) At the receiving end, a special receiver implements "tail-end switching," in which the receiver selects the data from one of the directions around the ring. The receiver can make this choice based on various performance monitoring (PM) mechanisms supported by SONET. This protection mechanism has the advantage that it is very simple, because no ring-level messaging is required to communicate a span break to the nodes on the ring. Rather, the PM facilities built into SONET ensure that a "bad" span does not impact physical connectivity between nodes, since no data whatsoever is lost due to a single span failure.

Unfortunately, there is a high price to be paid for this protection. Depending on the traffic pattern on the ring, UPSR requires 100% extra capacity (for a single "hubbed" pattern) to 300% extra capacity (for a uniform "meshed" pattern) to as much as (N-1)* 100% extra capacity (for an N node ring with a nearest neighbor pattern, such as that shown in Fig. 1) to be set aside for protection.

In the case of two-fiber BLSR, shown in Fig. 2A, data from any given node to another typically travels in one direction (solid arrows) around the ring. Data communication is shown between nodes 0 and 5. Half the capacity of each ring is reserved to protect against span failures on the other ring. The dashed arrows illustrate a ring that is typically not used for traffic between nodes 0 and 5 except in the case of a span failure or in the case of unusual traffic congestion.

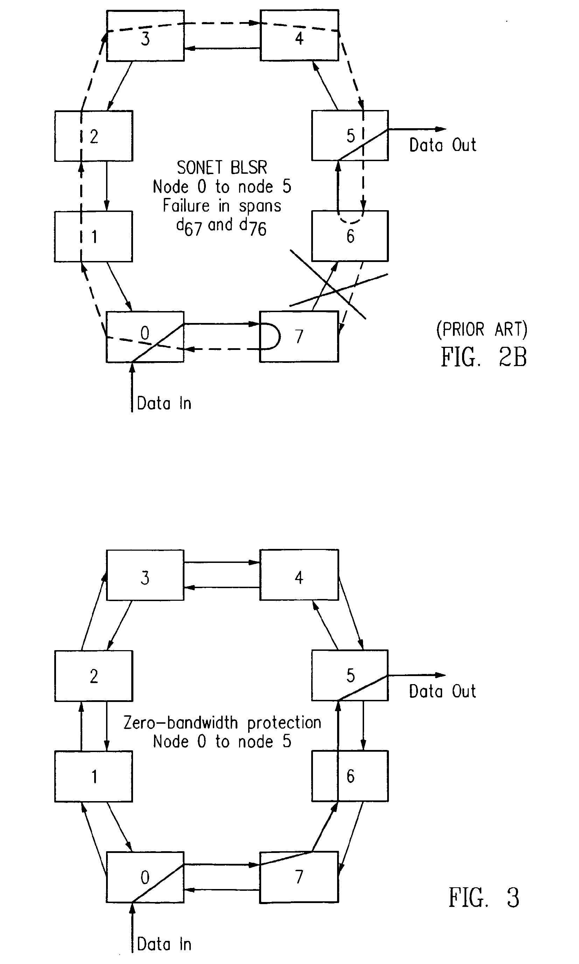

In Fig. 2B, the span between nodes 6 and 7 has experienced a fault. Protection switching is now provided by reversing the direction of the signal from node 0 when it encounters the failed span and using excess ring capacity to route the signal to node 5. This switching, which takes place at the same nodes that detect the fault, is very rapid and is designed to meet the 50 millisecond requirement.

BLSR protection requires 100% extra capacity over that which would be required for an unprotected ring, since the equivalent of the bandwidth of one full ring is not used except in the event of a span failure. Unlike UPSR, BLSR requires ring-level signaling between nodes to communicate information on span cuts and proper coordination of nodes to initiate ring protection.

Though these SONET ring protection technologies have proven themselves to be robust, they are extremely wasteful of capacity. Additionally, both UPSR and BLSR depend intimately on the capabilities provided by SONET for their operation, and therefore cannot be readily mapped onto non-SONET transport mechanisms.

What is needed is a protection technology where no extra network capacity is consumed during "normal" operation (i.e., when all ring spans are operational), which is less tightly linked to a specific transport protocol, and which is designed to meet the Telcordia 50 millisecond switching requirement.

US-A-4527270 discloses a routing switch with break a fault protection.

### SUMMARY

A network protection and restoration technique is described that efficiently utilizes the total bandwidth in the network to overcome the drawbacks of the previously described networks, that is not linked to a specific transport protocol such as SONET, and that is designed to meet the Telcordia 50 millisecond switching requirement. The disclosed network includes two rings, wherein a first ring transmits data in a "clockwise" direction (or direction 0), and the other ring transmits data in a "counterclockwise" direction (or direction 1 opposite to direction 0). Additional rings may also be used. The traffic is removed from the ring by the destination node.

During normal operations (i.e., all spans operational and undegraded), data between nodes flows on the ring that provides the lowest-cost path to the destination node. If traffic usage is uniformly distributed throughout the network, the lowest-cost path is typically the minimum number of hops to the destination node. Thus, both rings are fully utilized during normal operations. Each node determines the lowest-cost path from it to every other node on the ring. To do this, each node must know the network topology.

A node monitors the status of each link for which it is at the receiving end, e.g. each of its ingress links, to detect a fault. The detection of such a fault causes a highest-priority link status broadcast message to be sent to all nodes. Processing at each node of the information contained in the link status broadcast message results in reconfiguration of a routing table within each node so as to identify the optimum routing of source traffic to the destination node after the fault. Hence, all nodes know the status of the network and all independently identify the optimal routing path to each destination node when there is a fault in any of the links. The processing is designed to be extremely efficient to maximize switching speed.

Optionally, if it is desired to further increase the switching speed, an interim step can be used. A node that detects a link fault notifies its neighbor on the other side of that span that a link has failed. Any node that detects an ingress link failure or that receives such a notification wraps inbound traffic headed for that span around onto the other ring. Traffic will be wrapped around only temporarily until the previously described rerouting of traffic is completed.

Since the remaining links will now see more data traffic due to the failed link, traffic designated as "unprotected" traffic is given lower priority and may be dropped or delayed in favor of the "protected" traffic. Specific techniques are described for identifying a failed link, communicating the failed link to the other nodes, differentiating between protected and unprotected classes of traffic, and updating the routing tables. Although the embodiments described transmit packets of data, the invention may be applied to any network transmitting frames, cells, or using any other protocol. Frames and cells are similar to packets in that all contain data and control information pertaining at least to the source and destination for the data. A single frame may contain multiple packets, depending on the protocol. A cell may be fixed-size, depending on the protocol.

### BRIEF DESCRIPTION OF THE DRAWINGS

Fig. 1 illustrates inter-node physical routes taken by traffic from node 0 to node 5 using SONET UPSR, where a failure of spans between any single pair of nodes brings down only one of the two distinct physical routes for the traffic.
Fig. 2A illustrates an inter-node physical route taken by traffic from node 0 to node 5 using SONET two-fiber BLSR. Half of the capacity of each ring is reserved for protection, and half is used to carry regular traffic. The ring represented with dashed lines is the ring in which protection capacity is used to reroute traffic due to the span failure shown.
Fig. 2B illustrates the bi-directional path taken by traffic from node 0 to node 5 using the SONET BLSR structure of Fig. 2A when there is a failure in the link between nodes 6 and 7. Traffic is turned around when it encounters a failed link.
Fig. 3 illustrates a network in accordance with one embodiment of the present invention and, in particular, illustrates an inter-node physical route taken by traffic from node 0 to node 5.
Fig. 4 illustrates the network of Fig. 3 after a failure has occurred on the span between nodes 6 and 7. When a failure occurs impacting a link or span on the initial path (e.g., between nodes 0 and 5), the traffic is rerouted at the ingress node to travel in the other direction around the ring to reach the destination node.
Fig. 5 illustrates the optional interim state of the network (based on wrapping traffic from one ring to the other) between that shown in Fig. 3 and that shown in Fig. 4.
Fig. 6 illustrates pertinent hardware used in a single node.
Fig. 7 provides additional detail of the switching card and ring interface card in Fig. 6.
Fig. 8 is a flowchart illustrating steps used to identify a change in the status of the network and to re-route traffic through the network.

### DETAILED DESCRIPTION OF THE EMBODIMENTS

The purpose of the invention described herein is to achieve fast protection in a ring network while providing for efficient network capacity utilization. Certain aspects of the preferred embodiment are:
a. Transmission of a given packet between two nodes in only one direction around the ring (rather than in both directions as is done in SONET UPSR).
b. Differentiation between "protected" and "unprotected" traffic classes.
c. A fast topology communication mechanism to rapidly communicate information about a span break to all nodes in the ring.
d. A fast re-routing/routing table update mechanism to re-route paths impacted by a span break the other direction around the ring.
e. An optional interim wrapping mechanism that may be used to further increase protection switching speed.

These aspects are described in more detail below.

### Unidirectional Transmission

A given packet/flow between two nodes is transmitted in only a single direction around the network (even when there is a span fault) and is removed from the ring by the destination node, as is shown in Fig. 3 where node 0 transmits information to node 5 in only the direction indicated by the thick arrows. A transmission from node 5 to node 0 would only go through nodes 6 and 7 in the opposite direction. This allows for optimized ring capacity utilization since no capacity is set aside for protection.

The least-cost physical route is typically used for protected traffic. This is often the shortest-hop physical route. For example, a transmission from node 0 to node 2 would typically be transmitted via node 1. The shortest-hop physical route corresponds to the least-cost route when traffic conditions throughout the network are relatively uniform. If traffic conditions are not uniform, the least-cost physical route from node 0 to node 2 can instead be the long path around the ring.

The removal of packets from the ring by the destination node ensures that traffic does not use more capacity than is necessary to deliver it to the destination node, thus enabling increased ring capacity through spatial reuse of capacity. An example of spatial reuse is the following. If 20% of span capacity is used up for traffic flowing from node 0 to node 2 via node 1, then the removal of this traffic from the ring at node 2 means that the 20% of span capacity is now available for any traffic flowing on any of the other spans in the ring (between nodes 2 and 3, nodes 3 and 4, etc.)

### Protected and Unprotected Traffic Classes

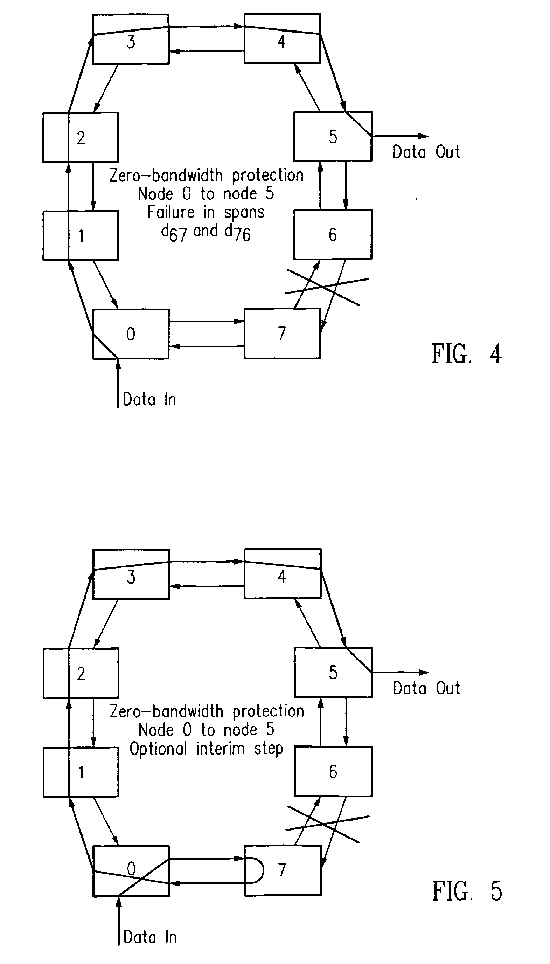

In the case of unidirectional transmission described above, the loss of any span in the ring will result in a reduction in network capacity. This follows from the fact that traffic that would flow along a given span during normal operations must share the capacity of other spans in the case of a failure of that span. For example, Fig. 4 shows a span break between nodes 6 and 7. In contrast to Fig. 3, a transmission from node 0 to node 5 must now travel in a clockwise direction on another ring (illustrated by the thick arrows), adding to the traffic on that ring.

Because some network capacity is lost in the case of a span outage, a heavily loaded network with no capacity set aside for protection must suffer some kind of performance degradation as a result of such an outage. If traffic is classified into a "protected" class and an "unprotected" class, network provisioning and control can be implemented such that protected traffic service is unaffected by the span outage. In such a case, all of the performance degradation is "absorbed" by the unprotected traffic class via a reduction in average, peak, and burst bandwidth allocated to unprotected traffic on remaining available spans so that there is sufficient network capacity to carry all protected traffic. Traffic within the unprotected class can be further differentiated into various subclasses such that certain subclasses suffer more degradation than do others. This degradation may consist of additional delay or dropping of this traffic. The mechanisms for traffic planning and management of protected and unprotected traffic are not covered in this specification.

### Fast Topology Communication Mechanism

Due to Telcordia requirements previously mentioned, the loss of a span in a ring must be rapidly sensed and communicated to all nodes in a ring.

In the case of a span outage, the node on the receiving end of each link within the span detects that each individual link has failed. If only a single link is out, then only the loss of that link is reported. Depending on the performance monitoring (PM) features supported by the particular communications protocol stack being employed, this detection may be based on loss of optical (or electrical) signal, bit error rate (BER) degradation, loss of frame, or other indications.

Each link outage must then be communicated to the other nodes. This is most efficiently done through a broadcast (store-and-forward) message (packet), though it could also be done through a unicast message from the detecting node to each of the other nodes in the network. This message must at least be sent out on the direction opposite to that leading to the broken span. The message must contain information indicating which link has failed.

### Fast Source Node Re-routing Mechanism

When a link outage message is received by a given node, the node must take measures to re-route traffic that normally passed through the link. A possible sequence of actions is:
a. Receive link outage message;
b. Evaluate all possible inter-node physical routes (there are 2*(N-1) of them in an N node ring) to determine which ones are impacted by the loss of the link;
c. Update routing tables to force all impacted traffic to be routed the other way around the ring; and
d. Update capacity allocated to unprotected traffic classes to account for reduced network capacity associated with the link outage. Details of how this capacity allocation is accomplished are not covered in this specification.

Being able to perform the operations above quickly requires that the various tables be properly organized to rapidly allow affected paths to be identified. Additionally, updates must be based either on computationally simple algorithms or on pre-calculated lookup tables.

### Optional Interim Wrapping Mechanism

To increase the speed of protection switching, it may be desirable to take direct action at the node(s) detecting the fault, rather than waiting for re-routing to take place at all nodes. A possible sequence of actions is:
a. Upon detection of an ingress link fault, a node must transmit a neighbor fault notification message to the node on the other side of the faulty link. This notification is only required if there is a single link failure, as the node using the failed link as an egress link would not be able to detect that it had become faulty. In the event that a full span is broken, the failure to receive these notifications do not affect the following steps.
b. Upon detection of an ingress link fault or upon receipt of a neighbor fault notification message, a node must wrap traffic bound for the corresponding egress link on that span onto the other ring. This is shown in Fig. 5. Traffic from node 0 bound for node 5 is wrapped by node 7 onto the opposite ring because the span connecting node 7 to node 6 is broken.

The above steps are optional and should only be used if increased protection switching speed using this approach is required. This is because wrapping traffic from one ring onto the other uses up significantly more ring capacity than the standard approach described in this document. During the period, albeit short, between the start of wrapping and the completion of rerouting at source nodes, the capacity that must be reserved for protection is as much as that required in two-fiber BLSR.

### Specific Algorithms

### Fast Topology Communication Mechanism

This section describes a specific fast mechanism for communicating topology changes to the nodes in a ring network. The mechanism for communicating information about a span or link break or degradation from a node to all other nodes on a ring is as follows.

A link status message is sent from each node detecting any link break or degradation on ingress links to the node, e.g. links for which the node is on the receiving end. (Therefore, for a single span break the two nodes on the ends of the span will each send out a link status message reporting on the failure of a single distinct ingress link.) This message may be sent on the ring direction opposite the link break or on both ring directions. For robustness, it is desirable to send the message on both ring directions. In a network that does not wrap messages from one ring direction to the other ring direction, it is required that the message be sent on both ring directions to handle failure scenarios such as that in Fig. 4. The message may also be a broadcast or a unicast message to each node on the ring. For robustness and for capacity savings, it is desirable to use broadcast. In particular, broadcast ensures that knowledge of the link break will reach all nodes, even those that are new to the ring and whose presence may not be known to the node sending the message. In either case, the mechanism ensures that the propagation time required for the message to reach all nodes on the ring is upper bounded by the time required for a highest priority message to travel the entire circumference of the ring. It is desirable that each mechanism also ensure that messages passing through each node are processed in the fastest possible manner. This minimizes the time for the message to reach all nodes in the ring.

The link status message sent out by a node should contain at least the following information: source node address, link identification of the broken or degraded link for which the node is on the receive end, and link status for that link. For simplicity of implementation, the link status message can be expanded to contain link identification and status for all links for which the node is on the receive end. The link identification for each link, in general, should contain at least the node address of the node on the other end of the link from the source node and the corresponding physical interface identifier of the link's connection to the destination node. The mechanism by which the source node obtains this information is found in the co-pending application entitled "Dual-Mode Virtual Network Addressing," Serial No. , filed herewith by Jason Fan et al., assigned to the present assignee. The physical interface identifier is important, for example, in a two-node network where the address of the other node is not enough to resolve which link is actually broken or degraded. Link status should indicate the level of degradation of the link, typically expressed in terms of measured bit error rate on the link (or in the event that the link is broken, a special identifier such as 1).

The link status message may optionally contain two values of link status for each link in the event that protection switching is non-revertive. An example of non-revertive switching is illustrated by a link degrading due to, for example, temporary loss of optical power, then coming back up. The loss of optical power would cause other nodes in the network to protection switch. The return of optical power, however, would not cause the nodes to switch back to default routes in the case of non-revertive switching until explicitly commanded by an external management system. The two values of link status for each link, therefore, may consist of a status that reflects the latest measured status of the link (previously described) and a status that reflects the worst measured status (or highest link cost) of the link since the last time the value was cleared by an external management system.

The link status message can optionally be acknowledged by the other nodes. In the event that the message is not acknowledged, it must be sent out multiple times to ensure that it is received by all other nodes. In the event that the message requires acknowledgement on receipt, it must be acknowledged by all expected recipient nodes within some time threshold. If not, the source node may choose to re-send the link status message to all expected recipients, or re-send the link status message specifically to expected recipients that did not acknowledge receipt of the message.

### Fast Source Node Re-routing Mechanism

This section describes a mechanism which allows a node in a ring network to rapidly re-route paths that cross broken links. The following describes a fast source node re-routing mechanism when node 0 is the source node.

For each destination node j, a cost is assigned to each output direction (0 and 1) from node 0 on the ring. A preferred direction for traffic from nodes 0 to j is selected based on the direction with the lowest cost. For simplicity, the mechanism for reassigning costs to the path to each destination node for each output direction from node 0 operates with a constant number of operations, irrespective of the current condition of the ring. (The mechanism may be further optimized to always use the minimum possible number of operations, but this will add complexity to the algorithm without significantly increasing overall protection switching speed.) The mechanism for reassigning an output direction to traffic packets destined for a given node based on the path cost minimizes the time required to complete this reassignment.

A table is maintained at each node with the columns Destination Node, direction 0 cost, and direction 1 cost. An example is shown as Table 1. The computation of the cost on a direction from node 0 (assuming node 0 as the source) to node j may take into account a variety of factors, including the number of hops from source to destination in that direction, the cumulative normalized bit error rate from source to destination in that direction, and the level of traffic congestion in that direction. Based on these costs, the preferred output direction for traffic from the source to any destination can be selected directly. The example given below assumes that the costs correspond only to the normalized bit error rate from source to destination in each direction. The cost on a given link is set to 1 if the measured bit error rate is lower than the operational bit error rate threshold. Conveniently, if all links are fully operational, the cumulative cost from node 0 to node j will be equal to the number of hops from node 0 to node j if there is no traffic congestion. Traffic congestion is not taken into account in this example.

For a representative ring with a total of 8 nodes (in clockwise order 0, 1, 2, 3, 4, 5, 6, 7), the table's normal operational setting at node 0 is:

**Table 1. Preferred direction table at node 0**

| Destination Node | Direction 0 cost | Direction 1 cost | Preferred Direction |
|---|---|---|---|
| 1 | 1 | 7 | 0 |
| 2 | 2 | 6 | 0 |
| 3 | 3 | 5 | 0 |
| 4 | 4 | 4 | 0 |
| 5 | 5 | 3 | 1 |
| 6 | 6 | 2 | 1 |
| 7 | 7 | 1 | 1 |

The preferred direction is that with the lower cost to reach destination node j. In the event that the costs to reach node j on direction 0 and on direction 1 are equal, then either direction can be selected. (Direction 0 is selected in this example.) The normal operational cost for each physical route (source to destination) is computed from the link status table shown in Table 2.

The pseudocode for selection of the preferred direction is:

```
    For j=1 to N-1 {N is the total number of nodes in the ring}
           Update direction 0 cost (dir_0_cost(j)) and direction 1 cost
    (dir_1_cost(j)) for each destination node j; {expanded later in this section}
               {HYST_FACT is the hysteresis factor to prevent a ping-pong effect
       due to BER variations in revertive networks. A default value for this used in
       SONET is 10}
              If(dir_0_cost(j) < dir_1_cost(j)/HYST_FACT),
                      dir_preferred(j) = 0;
              Else if (dir_1_cost(j)<dir_0_cost(j)/HYST-FACT),
                      dir_preferred(j) = 1;
              Else if dir_preferred(j) has a pre-defined value,
                       {This indicates that dir_preferred(j) has been previously set to
              a preferred direction and thus should not change if the above two
              conditions were not met}
                      dir_preferred(j) does not change;
              Else if dir_preferred(j) does not have a pre-defined value,
                      if dir_0_cost(j) < dir_1_cost(j),
                              dir_preferred(j) = 0;
                      Else if dir_1_cost(j) < dir_0_cost(j),
                              dir_preferred(j) = 1;
                      Else
                              dir_preferred(j) = 0;
              End {else if dir_preferred(j) does not have a pre-defined value}
       End { for loop j}
```

The link status table (accessed by a CPU at each node) is used to compute the costs in the preferred direction table above. The link status table's normal operational setting looks like:

**Table 2. Link status table (identical at every node)**

| Link Identifier, direction 0 | Link Identifier, direction 1 | Direction 0 cost | Direction 1 cost |
|---|---|---|---|
| d₀₁ | d₁₀ | 1 | 1 |
| d₁₂ | d₂₁ | 1 | 1 |
| d₂₃ | d₃₂ | 1 | 1 |
| d₃₄ | d₄₃ | 1 | 1 |
| d₄₅ | d₅₄ | 1 | 1 |
| d₅₆ | d₆₅ | 1 | 1 |
| d₆₇ | d₇₆ | 1 | 1 |
| d₇₀ | d₀₇ | 1 | 1 |

The cost for each link dij is the normalized bit error rate, where the measured bit error rate on each link is divided by the default operational bit error rate (normally 10E-9 or lower). In the event that the normalized bit error rate is less than 1 for a link, the value entered in the table for that link is 1.

The pseudocode for the line "Update direction 0 cost and direction 1 cost" for each node j in the pseudocode for selection of preferred direction uses the link status table shown in Table 2 as follows:

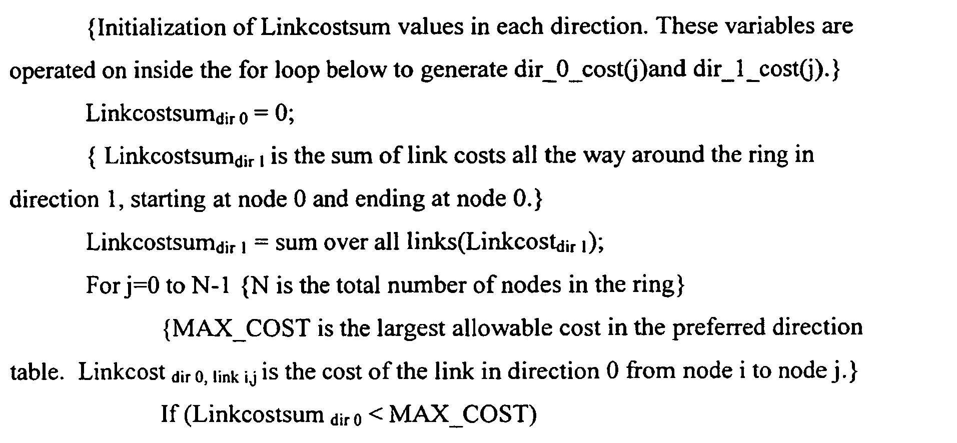

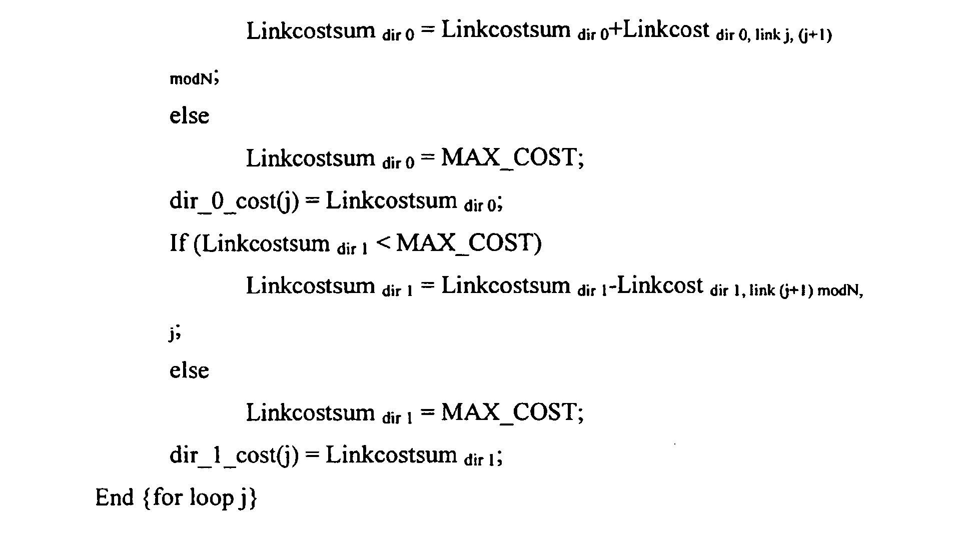

The update of the link status table is based on the following pseudocode:

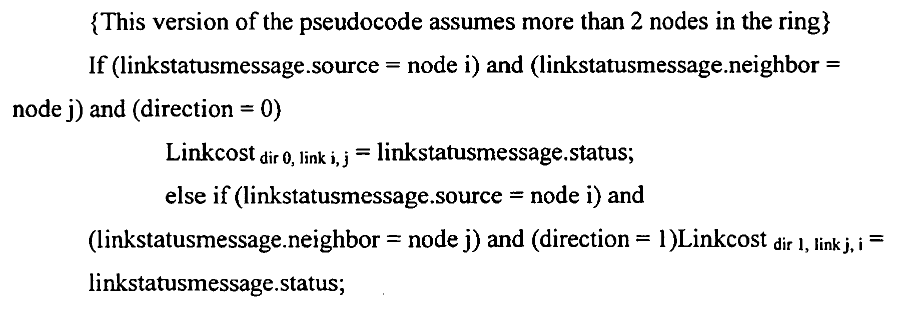

In the event that a link is broken, the linkstatusmessage.status for that link is a very large value. In the event that a link is degraded, the linkstatusmessage.status for that link is the measured bit error rate on that link divided by the undegraded bit error rate of that link. All undegraded links are assumed to have the same undegraded bit error rate.

The link status table may optionally contain two cost columns per direction to handle non-revertive switching scenarios. These would be measured cost (equivalent to the columns currently shown in Table 2) and non-revertive cost. The non-revertive cost column for each direction contains the highest value of link cost reported since the last time the value was cleared by an external management system. This cost column (instead of the measured cost) would be used for preferred direction computation in the non-revertive switching scenario. The preferred direction table may also optionally contain two cost columns per direction, just like the link status table. It may also contain two preferred direction columns, one based on the measured costs and the other based on the non-revertive costs. Again, the non-revertive cost columns would be used for computations in the non-revertive switching scenario.

As an example, assume that the clockwise link between node 2 and node 3 is degraded with factor a (where a > HYST_FACT), the clockwise link between node 4 and node 5 is broken (factor MAX), the counterclockwise link between node 1 and node 2 is degraded with factor b (where b > HYST_FACT), and the counterclockwise link between node 5 and node 6 is degraded with factor c (where c < a/HYST_FACT). The link status table for this example is shown in Table 3.

**Table 3. Example of link status table with degraded and broken links**

| Link Identifier, direction 0 | Link Identifier, direction 1 | Direction 0 cost (clockwise) | Direction 1 cost (counterclockwise) |
|---|---|---|---|
| d₀₁ | d₁₀ | 1 | |
| d₁₂ | d₂₁ | 1 | b |
| d₂₃ | d₃₂ | a | 1 |
| d₃₄ | d₄₃ | 1 | 1 |
| d₄₅ | d₅₄ | MAX | 1 |
| d₅₆ | d₆₅ | 1 | c |
| d₆₇ | d₇₆ | 1 | 1 |
| d₇₀ | d₀₇ | 1 | 1 |

The costs of the links needed between the source node and destination node are added to determine the total cost.

The preferred direction table for the source node 0 is then:

**Table 4. Example of preferred direction table with degraded and broken links**

| Destination Node | Direction 0 cost (clockwise) | Direction 1 cost (counterclockwise) | Preferred Direction |
|---|---|---|---|
| 1 | 1 | c+b+5 | 0 |
| 2 | 2 | c+5 | 0 |
| 3 | a+2 | c+4 | 1 |
| 4 | a+3 | c+3 | 1 |
| 5 | MAX | c+2 | 1 |
| 6 | MAX | 2 | 1 |
| 7 | MAX | 1 | 1 |

(In the selection of the preferred direction, it is assumed that HYST_FACT = 10.)

Once these preferred directions are determined, a corresponding mapping table of destination node to preferred direction in packet processors on the data path is modified to match the above table.

### Neighbor Fault Notification in Optional Interim Wrapping Mechanism

This section describes a specific fast mechanism for communication of a fault notification from the node on one side of the faulty span to the node on the other side. This mechanism, as described previously, is only necessary in the event of a single link failure, since the node using that link as its egress link cannot detect that it is faulty.

A neighbor fault notification message is sent from each node detecting any link break or degradation on an ingress link to the node. The message is sent on each egress link that is part of the same span as the faulty ingress link. To ensure that it is received, the notification message can be acknowledged via a transmission on both directions around the ring. If it is not acknowledged, then the transmitting node must send the notification multiple times to ensure that it is received. The message is highest priority to ensure that the time required to receive the message at the destination is minimized.

The neighbor fault notification message sent out by a node should contain at least the following information: source node address, link identification of the broken or degraded link for which the node is on the receive end, and link status for that link. For simplicity of implementation, the neighbor fault notification message may be equivalent to the link status message broadcast to all nodes that has been previously described.

### DESCRIPTION OF HARDWARE

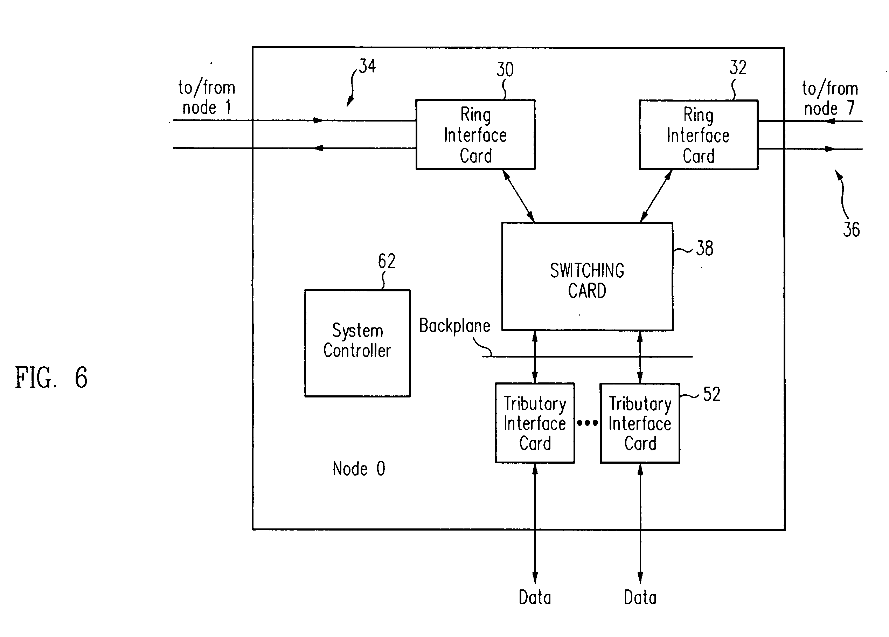

Fig. 6 illustrates the pertinent functional blocks in each node. Node 0 is shown as an example. Each node is connected to adjacent nodes by ring interface cards 30 and 32. These ring interface cards convert the incoming optical signals on fiber optic cables 34 and 36 to electrical digital signals for application to switching card 38.

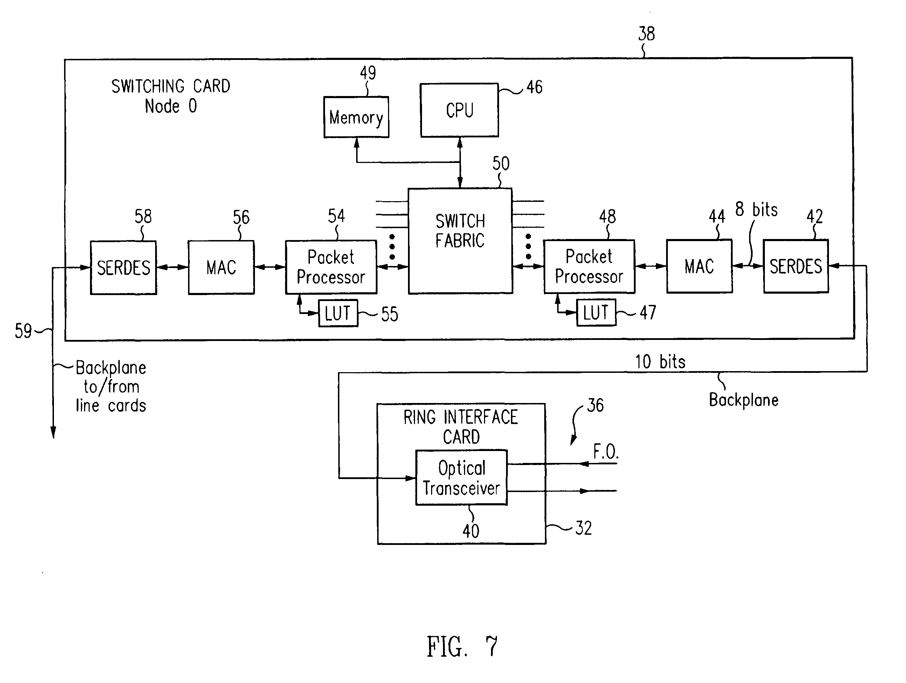

Fig. 7 illustrates one ring interface card 32 in more detail showing the optical transceiver 40. An additional switch in card 32 may be used to switch between two switching cards for added reliability. The optical transceiver may be a Gigabit Ethernet optical transceiver using a 1300 nm laser, commercially available.

The serial output of optical transceiver 40 is converted into a parallel group of bits by a serializer/deserializer (SERDES) 42 (Fig. 6). The SERDES 42, in one example, converts a series of 10 bits from the optical transceiver 40 to a parallel group of 8 bits using a table. The 10 bit codes selected to correspond to 8 bit codes meet balancing criteria on the number of 1's and 0's per code and the maximum number of consecutive 1's and 0's for improved performance. For example, a large number of sequential logical 1's creates baseline wander, a shift in the long-term average voltage level used by the receiver as a threshold to differentiate between 1's and 0's. By utilizing a 10-bit word with a balanced number of 1's and 0's on the backplane, the baseline wander is greatly reduced, thus enabling better AC coupling of the cards to the backplane.

When the SERDES 42 is receiving serial 10-bit data from the ring interface card 32, the SERDES 42 is able to detect whether there is an error in the 10-bit word if the word does not match one of the words in the table. The SERDES 42 then generates an error signal. The SERDES 42 uses the table to convert the 8-bit code from the switching card 38 into a serial stream of 10 bits for further processing by the ring interface card 32. The SERDES 42 may be a model VSC 7216 by Vitesse or any other suitable type.

A media access controller (MAC) 44 counts the number of errors detected by the SERDES 42, and these errors are transmitted to the CPU 46 during an interrupt or pursuant to polling mechanism. The CPU 46 may be a Motorola MPC860DT microprocessor. Later, it will be described what happens when the CPU 46 determines that the link has degraded sufficiently to take action to cause the nodes to re-route traffic to avoid the faulty link. The MAC 44 also removes any control words forwarded by the SERDES and provides OSI layer 2 (data-link) formatting for a particular protocol by structuring a MAC frame. MACs are well known and are described in the book "Telecommunication System Engineering" by Roger Freeman, third edition, John Wiley & Sons, Inc., 1996. The MAC 44 may a field programmable gate array.

The packet processor 48 associates each of the bits transmitted by the MAC 44 with a packet field, such as the header field or the data field. The packet processor 48 then detects the header field of the packet structured by the MAC 44 and may modify information in the header for packets not destined for the node. Examples of suitable packet processors 48 include the XPIF-300 Gigabit Bitstream Processor or the EPIF 4-L3C1 Ethernet Port L3 Processor by MMC Networks.

The packet processor 48 interfaces with an external search machine/memory 47 (a look-up table) that contains routing information to route the data to its intended destination. The updating of the routing table in memory 47 will be discussed in detail later.

A memory 49 in Fig. 6 represents all other memories in the node, although it should be understood that there may be distributed SSRAM, SDRAM, flash memory, and EEPROM to provide the necessary speed and functional requirements of the system

The packet processor 48 provides the packet to a port of the switch fabric 50, which then routes the packet to the appropriate port of the switch fabric 50 based on the packet header. If the destination address in the packet header corresponds to the address of node 0 (the node shown in Fig. 6), the switch fabric 50 then routes the packet to the appropriate port of the switch fabric 50 for receipt by the designated node 0 tributary interface card 52 (Fig. 5) (to be discussed in detail later). If the packet header indicates an address other than to node 0, the switch fabric 50 routes the packet through the appropriate ring interface card 30 or 32 (Fig. 5). Control packets are routed to CPU 46. Such switching fabrics and the routing techniques used to determine the path that packets need to take through switch fabrics are well known and need not be described in detail.

One suitable packet switch is the MMC Networks model nP5400 Packet Switch Module. In one embodiment, four such switches are connected in each switching card for faster throughput. The switches provide packet buffering, multicast and broadcast capability, four classes of service priority, and scheduling based on strict priority or weighted fair queuing.

A packet processor 54 associated with one or more tributary interface cards, for example, tributary interface card 52, receives a packet from switch fabric 50 destined for equipment (e.g., a LAN) associated with tributary interface card 52. Packet processor 54 is bi-directional, as is packet processor 48. Packet processors 54 and 48 may be the same model processors. Generally, packet processor 54 detects the direction of the data through packet processor 54 as well as accesses a routing table memory 55 for determining some of the desired header fields and the optimal routing path for packets heading onto the ring, and the desired path through the switch for packets heading onto or off of the ring. This is discussed in more detail later. When the packet processor 54 receives a packet from switch fabric 50, it forwards the packet to a media access control (MAC) unit 56, which performs a function similar to that of MAC 44, which then forwards the packet to the SERDES 58 for serializing the data. SERDES 58 is similar to SERDES 42.

The output of the SERDES 58 is then applied to a particular tributary interface card, such as tributary interface card 52 in Fig. 5, connected to a backplane 59. The tributary interface card may queue the data and route the data to a particular output port of the tributary interface card 52. Such routing and queuing by the tributary interface cards may be conventional and need not be described in detail. The outputs of the tributary interface cards may be connected electrically, such as via copper cable, to any type of equipment, such as a telephone switch, a router, a LAN, or other equipment. The tributary interface cards may also convert electrical signals to optical signals by the use of optical transceivers, in the event that the external interface is optical.

The system controller 62 obtains status information from the node and interfaces with a network management system. This aspect of the node is not relevant to the invention. The system controller can be programmed to report on various tests of the network.

In one embodiment, the above-described hardware processes bits at a rate greater than 1 Gbps.

### Functions of Hardware During Span Failure/Degradation

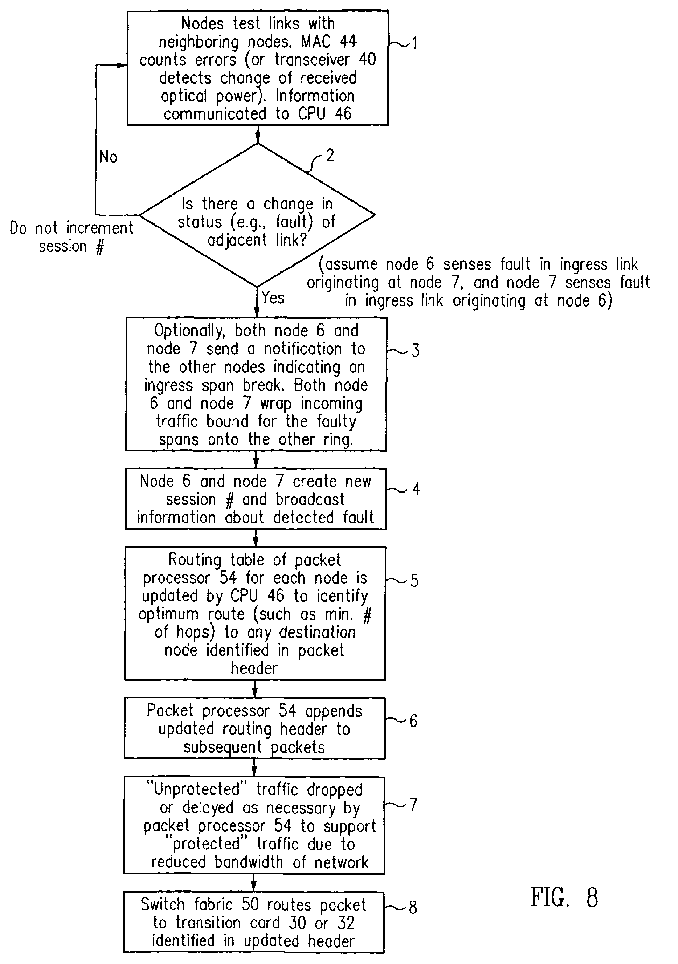

Fig. 8 is a flow chart summarizing the actions performed by the network hardware during a span failure or degradation. Since conventional routing techniques and hardware are well known, this discussion will focus on the novel characteristics of the preferred embodiment.

In step 1 of Fig. 8, each of the nodes constantly or periodically tests its links with neighboring nodes. The MAC 44 in Fig. 7 counts errors in the data stream (as previously described) and communicates these errors to the CPU 46. The CPU compares the bit error rate to a predetermined threshold to determine whether the link is satisfactory. An optical link failure may also be communicated to the CPU. CPU 46 may monitor ingress links from adjacent devices based on error counting by MAC 44 or based on the detection of a loss of optical power on ingress fiber 36. This detection is performed by a variety of commercially available optical transceivers such as the Lucent NetLight transceiver family. The loss of optical power condition can be reported to CPU 46 via direct signaling over the backplane (such as via I2C lines), leading to an interrupt or low-level event at the CPU.

In step 2, the CPU 46 determines if there is a change in status of an adjacent link. This change in status may be a fault (bit error rate exceeding threshold) or that a previously faulty link has been repaired. It will be assumed for this example that node 6 sensed a fault in ingress link connecting it to node 7.

If there is no detection of a fault in step 2, no change is made to the network. It is assumed in Fig. 8 that adjacent nodes 6 and 7 both detect faults on ingress links connecting node 6 to node 7. The detection of a fault leads to an interrupt or low-level event (generated by MAC 44) sent through switch fabric 50 to CPU 46 signaling the change in status.

In optional step 3, nodes 6 and 7 attempt to notify each other directly of the ingress link fault detected by each. The notification sent by node 6, for example, is sent on the egress link of node 6 connected to node 7. If the entire span is broken, these notifications clearly do not reach the destination. They are useful only if a single link within a span is broken. This is because a node has no way to detect a fiber break impacting an egress link. Based on this notification, each node can then directly wrap traffic in the fashion shown in Fig. 5. The wrapping of traffic in node 6 is performed through a configuration command from CPU 46 to packet processor 48 connected as shown in Fig. 7 to ring interface card 32 (assuming that links from ring interface card 32 connect to node 7). After receiving this command, packet processor 48 loops back traffic through the switching fabric and back out ring interface card 30 that it normally would send directly to node 7.

Each communication by a node of link status is associated with a session number. A new session number is generated by a node only when it senses a change in the status of a neighboring node. As long as the nodes receive packets with the current session number, then the nodes know that there is no change in the network. Both nodes 6 and 7 increment the session number stored at each node upon detection of a fault at each node.

In step 4, both node 6 and node 7 then broadcast a link status message, including the new session number, conveying the location of the fault to all the nodes. Each node, detecting the new session number, forwards the broadcast to its adjacent node.

A further description of the use of the session number in general topology reconfiguration scenarios, of which a link or span failure is one, is found in the co-pending application entitled "Dual-Mode Virtual Network Addressing," by Jason Fan et al. assigned to the present assignee.

In step 5, the identity of the fault is then used by the packet processor 54 in each node to update the routing table in memory 55. Routing tables in general are well known and associate a destination address in a header with a particular physical node to which to route the data associated with the header. Each routing table is then configured to minimize the cost from a source node to a destination node. Typically, if the previously optimized path to a destination node would have had to go through the faulty link, that route is then updated to be transmitted through the reverse direction through the ring to avoid the faulty route. The routing table for each of the packet processors 54 in each node would be changed as necessary depending upon the position of the node relative to the faulty link. Details of the routing tables have been previously described.

In one embodiment, each of the nodes must acknowledge the broadcast with the new session number, and the originating node keeps track of the acknowledgments. After a time limit has been exceeded without receiving all of the acknowledgments, the location of the fault is re-broadcast without incrementing the sequence number.

Accordingly, all nodes store the current topology of the ring, and all nodes may independently create the optimum routing table entries for the current configuration of the ring.

In step 6, the routing table for each node has been updated and data traffic resumes. Accordingly, data originating from a LAN connected to a tributary interface card 52 (Fig. 5) has appended to it an updated routing header by packet processor 54 for routing the data through switch fabric 50 to the appropriate output port for enabling the data to arrive at its intended destination. The destination may be the same node that originated the data and, thus, the switch fabric 50 would wrap the data back through a tributary interface card in the same node. Any routing techniques may be used since the invention is generally applicable to any protocol and routing techniques.

Since some traffic around the ring must be re-routed in order to avoid the faulty link, and the bandwidths of the links are fixed, the traffic to be transmitted around the healthy links may exceed the bandwidth of the healthy links. Accordingly, some lower priority traffic may need to be dropped or delayed, as identified in step 7. Generally, the traffic classified as "unprotected" is dropped or delayed as necessary to support the "protected" traffic due to the reduced bandwidth.

In one embodiment, the packet processor 54 detects the header that identifies the data as unprotected and drops the packet, as required, prior to the packet being applied to the switch fabric 50. Voice traffic is generally protected.

In step 8, switch fabric 50 routes any packet forwarded by packet processor 54 to the appropriate output port for transmission either back into the node or to an adjacent node.

The above description of the hardware used to implement one embodiment of the invention is sufficient for one of ordinary skill in the art to fabricate the invention since the general hardware for packet switching and routing is very well known. One skilled in the art could easily program the MACs, packet processors, CPU 46, and other functional units to carry out the steps describe herein. Firmware or software may be used to implement the steps described herein.

While particular embodiments of the present invention have been shown and described, it will be obvious to those skilled in the art that changes and modifications may be made without departing from this invention in its broader aspects.

## Claims

1. A routing switch for use in a communications network in which a plurality of routing switches are interconnected by communication links in a first ring and a second ring, which routing switch comprises:
one or more transceivers (30, 32) connectable to associated communication links (34, 36) for connection to one or more adjacent routing switches in said network;
a routing table (47);
a switch fabric (50) arranged to route traffic to and from said one or more transceivers (30, 32) based on the routing table (47), and
one or more processors (46) adapted to:
test the quality of said communication links between said one or more adjacent routing switches;
detect whether one or more first links of said communication links do not meet a quality threshold;
transmit information identifying said one or more first links from the routing switch to other routing switches in said network;
revise said routing table (47) to reroute impacted traffic, such that impacted traffic does not traverse said one or more first links due to said one or more first links being faulty; and
route such impacted traffic to a destination node, based on said revised routing table, in a direction around said ring different from a direction that it would have travelled to said destination node had said one or more first links not been faulty;
**CHARACTERISED IN THAT**:
the switch fabric (50) is arranged to route traffic to and from said one or more transceivers (30, 32) so that during normal operation traffic flows to other routing switches in said network along both the first ring and the second ring; and
the processor (46) is arranged to revise said routing table (47) to create a reroute path by taking into account a number of hops for the traffic between a source and a destination switch in said reroute path, a cumulative normalised bit error rate from the source and the destination switch in said reroute path and a level of traffic congestion between the source and the destination switch in said reroute path

2. The routing switch of Claim 1, wherein said one or more processors (46) includes a CPU connected to the switch fabric (50).

3. The routing switch of Claim 1 or Claim 2, wherein the one or more processors (46) are arranged to control the routing switch to periodically transmit and receive test messages to and from neighbouring routing switches in said network and detect the quality of links carrying such test messages.

4. The routing switch of Claim 3, wherein the one or more processors (46) are arranged to control the routing switch to detect the quality of said links based on comparing a bit error rate to a threshold.

5. The routing switch of Claim 3, wherein the one or more processors (46) are arranged to control the routing switch to detect the quality of said links by detecting a loss of an optical signal.

6. The routing switch of Claim 3, wherein the one or more processors (46) are arranged to control the routing switch to detect the quality of said links by detecting a loss of an electrical signal.

7. The routing switch of Claim 3, wherein the one or more processors (46) are arranged to control the routing switch to detect the quality of said links by detecting a loss of a frame.

8. The routing switch of Claim 1 or Claim 2, wherein the one or more processors (46) are arranged to control the routing switch to receive messages from other routing switches in said network identifying a faulty link and revise the routing table (47) to reroute traffic.

9. The routing switch of Claim 1 or Claim 2, wherein the one or more processors (46) are arranged to control the routing switch to periodically transmit link status messages along with a session number, create a new session number when it has been detected that said one or more first links do not meet said quality threshold, and transmit the identity of any faulty links along with said new session number to other routing switches in said ring.

10. The routing switch of Claim 9, wherein the one or more processors (46) are arranged to control the routing switch to compare a transmitted session number to a stored session number and, if the session number is different, revise the routing table (47) to take into account a faulty link.

11. The routing switch of Claim 10, wherein the one or more processors (46) are arranged to control the routing switch to revise said routing table to identify optimum routes for traffic destination.

12. The routing switch of any preceding Claim, wherein the one or more processors (46) are arranged to control the routing switch to append a routing header to a message to be sent to said destination node.

13. The routing switch of any preceding Claim, wherein said traffic comprises packets.

14. The routing switch of any of Claims 1 to 12, wherein said traffic comprises cells.

15. The routing switch of any preceding Claim, wherein the one or more processors (46) are arranged to control the routing switch to drop certain types of traffic due to a reduced bandwidth in said network when said one or more first links are faulty.

16. The routing switch of any preceding Claim, wherein the one or more processors (46) are arranged to control the routing switch to wrap inbound traffic headed for a routing switch with a faulty link around a different direction in said network.

17. The routing switch of any preceding Claim, wherein the one or more processors (46) are arranged to control the routing switch to require an acknowledgement by said other routing switches that a link status message has been received and, if said acknowledgement has not been received, re-transmit said status message.

18. The routing switch of any preceding Claim, arranged to process traffic at a rate grater than 1 gigabits per second.

19. The routing switch of Claim 1, wherein the one or more processors (46) are arranged to control the routing switch to detect whether one or more first links, when connected thereto, meet a quality threshold, after not meeting said quality threshold, and transmit information to other routing switches to identify that said one or more first links now meet said quality threshold.

20. A method performed by a communications network in which nodes are interconnected by communication links in a first ring and a second ring, which method comprises:
automatically testing (1) the quality of the communication links between nodes;
detecting (2) by a first node whether one or more first links do not meet a quality threshold;
transmitting (3) information from said first node to other nodes to identify said one or more first links;
revising (5) a routing table (47) in at least some of said nodes to reroute impacted traffic such that the rerouted traffic does not traverse said one or more first links, due to said one or more first links being faulty; and
routing traffic by a source node to a destination node, based on a revised routing table (47) at the source node, so as to route traffic in a direction around the network different from a direction that the traffic would have travelled to the destination node had said one or more first links not been faulty;
CHARACTERISES IN THAT:
said routing table (47) is revised to create a reroute path by taking into account a number of hops for the traffic between a source and a destination switch in said reroute path, a cumulative normalised bit error rate from the source and the destination switch in said reroute path, and a level of traffic congestion between the source and the destination switch in said reroute path.

21. The method of Claim 20, wherein the traffic comprises information in a format in accordance with a protocol.

22. The method of Claim 21, wherein the information is in the form of packets.

23. The method of Claim 21, wherein the information is in the form of frames.

24. The method of Claim 21, wherein the information is in the form of cells.

25. The method of any of Claims 20 to 24, wherein a status of a link is assigned a quality value, and wherein the transmitting step comprises:
charging the quality value by the first node to indicate a change in status of the link due to detection by said first node that the link does not meet said quality threshold; and
transmitting the information to identify said link as well as a changed quality value.

26. The method of Claim 25, including the steps of:
receiving by nodes in the network a transmitted signal from said first node, the transmitted signal including said changed quality value; and in response,
revising a routing table (47) in at least some of said nodes to reroute traffic to take into account said one or more first links being faulty.

27. The method of Claim 26, wherein the routing table (47) is not revised if said quality value is the same as a previous quality value.

28. The method of any of Claims 20 to 27, including the steps of:
designating a first class of traffic to have a higher priority than a second class of traffic; and
reducing capacity allocated to the second class of traffic if there is a reduction of bandwidth of the network due to said revising of the routing table (47).

29. The method of any of Claims 20 to 28, including the step of removing from the network traffic designated to be received by a destination node upon receipt of said traffic by said destination node.

30. The method of any of Claims 20 to 29, wherein the first ring of links communicate in a first direction around the network and the second ring of links communicating in the opposite direction around the network, the method further comprising:
routing traffic from a source node on the first ring in a clockwise direction to one or more destination nodes; and
routing traffic by the source node on the second ring in a counter-clockwise direction to one or more destination nodes,
and wherein traffic generated by a source node destined for a single destination node is transmitted in only one direction around said network depending on a relative location of the source node with respect to the single destination node.

31. The method of any of Claims 20 to 30, wherein the step of automatically testing the quality of links between nodes comprises:
sending an address of a source node to an adjacent node along a link and detecting the quality of the link between the source node and said adjacent node.

32. The method of Claim 31, wherein detecting the quality of said link between the source node and said adj acent node comprises detecting a bit error rate.

33. The method of Claim 31, wherein detecting the quality of said link between the source node and said adjacent node comprises detecting whether said address has been received.

34. The method of Claim 31, wherein detecting the quality of said link between said source node and said adjacent node comprises detecting a loss of optical power by an optical receiver in said node.

35. The method of any of Claims 20 to 34, wherein revising said routing table (47) comprises:
determining which routes between nodes are impacted by said one or more links being faulty; and
revising the routing table (47) to force all impacted traffic to be routed in an opposite direction around said ring.

36. The method of Claim 35, wherein revising said routing table (47) is performed using an algorithm.

37. The method of Claim 35, wherein revising said routing table (47) uses pre-calculated lookup tables.

38. The method of any of Claims 20 to 37, wherein transmitting by the first node further comprises:
transmitting by said first node to other nodes in the network upon identifying one or more first links not meeting said quality threshold, a source node address of said first node and an identification of the faulty one or more links.

39. The method of Claim 38, wherein identification of one or more first links that do not meet said quality threshold includes a node address of the nodes on the other end of a faulty link from the first node.

40. The method of Claim 38, wherein identification of one or more faulty links includes identifying a physical interface identifying the connection of a faulty link to the first node.

41. The method of Claim 38, wherein transmitting further comprises communicating a link status including the level of degradation of the faulty one or more links.

42. The method of Claim 41, wherein the level of degradation identifies a status based on a measured bit error rate.

43. The method of any of Claims 20 to 42, wherein the one or more first links that do not meet a quality threshold do so due to a node failure.

## Patentansprüche

1. Leitweglenkungsschalter zur Verwendung in einem Kommumkationsnetz, in dem eine Vielzahl von Leitweglenkungsschaltern durch Verbindungsstrecken in einem ersten Ring und einem zweiten Ring verschaltet sind, der Leitweglenkungsschalter umfassend:
einen oder mehrere Sender/Empfänger (30, 32), verbindbar mit assoziierten Verbindungsstrecken (34, 36) zur Verbindung mit einem oder mehreren angrenzenden Leitweglenk-ungsschaltem in dem Netz;
eine Leitwegtabelle (47);
ein Schaltgefüge (50), angeordnet, um Verkehr zu und von dem einen oder den mehreren Sendern/Empfängern (30, 32) basierend auf der Leitwegtabelle (47) zu lenken, und
einen oder mehrere Prozessoren (46), angepasst zum:
Prüfen der Qualität der Verbindungsstrecken zwischen dem einen oder den mehreren angrenzenden Leitweglenkungsschaltem;
Erkennen, ob eine oder mehrere erste Verbindungen der Verbindungsstrecken einem Qualitäts-Schwellenwert nicht entsprechen;
Übertragen von Informationen, die die eine oder die mehreren ersten Verbindungen von dem Leitweglenkungsschalter zu anderen Leitweglenkungsschaltern in dem Netz identifizierten;
Revidieren der Leitwegtabelle (47), um beeinträchtigten Verkehr derart umzuleiten, dass beeinträchtigter Verkehr nicht die eine oder die mehreren ersten Verbindungen durchläuft, weil die eine oder die mehreren ersten Verbindungen fehlerhaft sind; und
Leiten dieses beeinträchtigten Verkehrs zu einem Zielknoten, basierend auf der revidierten Leitwegtabelle, in einer Richtung um den Ring, die von einer Richtung verschieden ist, die er zu dem Zielknoten genommen hätte, wären die eine oder die mehreren ersten Verbindungen nicht fehlerhaft gewesen;
**dadurch gekennzeichnet, dass**:
das Schaltgefüge (50) angeordnet ist, um Verkehr zu und von dem einen oder den mehreren Sendem/Empfängern (30, 32) zu leiten, so dass Verkehr während des normalen Betriebs zu anderen Leitweglenkungsschaltern in dem Netz entlang sowohl des ersten Rings als auch des zweiten Rings fließt; und
der Prozessor (46) angeordnet ist, um die Leitwegtabelle (47) zu revidieren, um einen Umleitungsweg zu erzeugen, indem eine Zahl von Abschnitten für den Verkehr zwischen einer Ausgangs- und einer Ziel-Vermittlungseinrichtung in dem Umleitungsweg, eine kumulative normalisierte Bitfehlerrate von der Ausgangs- und der Ziel-Vermittlungseinrichtung in dem Umleitungsweg und ein Grad der Verkehrsüberlastung zwischen der Ausgangs- und der Ziel-Vermittlungseinrichtung in dem Umleitungsweg berücksichtigt werden.

2. Leitweglenkungsschalter nach Anspruch 1, wobei der eine oder die mehreren Prozessoren (46) eine ZE enthält, die mit dem Schaltgefüge (50) verbunden ist.

3. Leitweglenkungsschalter nach Anspruch 1 oder Anspruch 2, wobei der eine oder die mehreren Prozessoren (46) angeordnet sind, um den Leitweglenkungsschalter zu steuern, um periodisch Prüfnachrichten zu und von benachbarten Leitweglenkungsschaltern in dem Netz zu übertragen und zu empfangen und die Qualität von Verbindungen, die solche Prüfnachrichten führen, zu erkennen.

4. Leitweglenkungsschalter nach Anspruch 3, wobei der eine oder die mehreren Prozessoren (46) angeordnet sind, um den Leitweglenkungsschalter zu steuern, um die Qualität der Verbindungen basierend auf Vergleichen einer Bitfehlerrate mit einem Schwellenwert zu erkennen.

5. Leitweglenkungsschalter nach Anspruch 3, wobei der eine oder die mehreren Prozessoren (46) angeordnet sind, um den Leitweglenkungssehalter zu steuern, um die Qualität der Verbindungen durch Erkennen eines Verlusts eines optischen Signals zu erkennen.

6. Leitweglenkungsschalter nach Anspruch 3, wobei der eine oder die mehreren Prozessoren (46) anbeordnet sind, um den Leitweglenkungsschalter zu steuern, um die Qualität der Verwindungen durch Erkennen eines Verlusts eines elektrischen Signals zu erkennen.

7. Leitweglenkungsschalter nach Anspruch 3, wobei der eine oder die mehreren Prozessoren (46) angeordnet sind, um den Leitweglenkungsschalter zu steuern, um die Qualität der Verbindungen durch Erkennen eines Verlusts eines Rahmens zu erkennen.

8. Leitweglenkurigsschalter nach Anspruch 1 oder Anspruch 2, wobei der eine oder die mehreren Prozessoren (46) angeordnet sind, um den Leitweglenkungsschalter zu steuern, um Meldungen von anderen Leitweglenkungsschaltern in dem Netz, die eine fehlerhafte Verbindung identifizieren, zu empfangen und die Leitwegtabelle (47) zur Umleitung von Verkehr zu revidieren.

9. Leitweglenkungsschalter nach Anspruch 1 oder Anspruch 2, wobei der eine oder die mehreren Prozessoren (46) angeordnet sind, urin den Leitweglenkungsschalter zu steuern, um periodisch Verbindungsstatusmeldungen zusammen mit einer Sitzungsnummer zu übertragen, eine neue Sitzungsnummer zu erzeugern, wenn erkannt wurde, dass die eine oder die mehreren ersten Verbindungen dem Qualitäts-Schwellenwert nicht entsprechen, und die Identität von fehlerhaften Verbindungen zusammen mit einer neuen Sitzungsnummer zu anderen Leitweglenkungsschaltern in dem Ring zu übertragen.

10. Leitweglenkungsschalter nach Anspruch 9, wobei der eine oder die mehreren Prozessoren (46) angeordnet sind, um den Leitweglenkungsschalter zu steuern, um eine übertragene Sitzungsnummer mit einer gespeicherten Sitzungsnummer zu vergleichen und, wenn die Sitzungsnummer verschieden ist, die Leitwegtablle (47) zu revidieren, um eine fehlerhafte Verbindung zu berücksichtigen.

11. Leitweglenkungsschalter nach Anspruch 10, wobei der eine oder die mehreren Prozessoren (46) angeordnet sind, um den Leitweglenkungsschalter zu steuern, um die Leitwegtabelle zu Revidieren, um optimale Leitwege für Verkehrsziele zu identifizieren.

12. Leitweglenkungsschalter nach einem der vorstehenden Ansprüche, wobei der eine oder die mehreren Prozessoren (46) anbeordnet sind, um den Leitweglenkungsschalter zu steuern, um einen Leitweglenkungskopfan eine Meldung anzufügen, die zu dem Zielknoten zu senden ist.

13. Leitweglenkungsschalter nach einem der vorstehenden Ansprüche, wobei der Verkehr Pakete umfasst.

14. Leitweglenkungsschalter nach einem der Ansprüche 1 bis 12, wobei der Verkehr Zellen umfasst.

15. Leitweglenkungsschalter nach einem der vorstehenden Ansprüche, wobei der eine oder die mehreren Prozessoren (46) anbeordnet sind, um den Leitweglenkungsschalter zu steuern, um bestimmte Verkehrsarten aufgrund einer reduzierten Bandbreite in dem Netz zu unterbrechen, wenn die eine oder die mehreren ersten Verbindungen fehlerhaft; sind.

16. Leitweglenkungsschalter nach einem der vorstehenden Ansprüche, wobei der eine oder die mehreren Prozessoren (46) anbeordnet sind, um eingehenden Verkehr, der zu einem Leitweglenkungsschalter mit einer fehlerhaften Verbindung gerichtet ist, in eine andere Richtung in dem Netz umzulenken.

17. Leitweglenkungsschalter nach einem der vorstehenden Anspruche, wobei der eine oder die mehreren Prozessoren (46) angeordnet sind, um den Leitweglenkungsschalter zu steuern, um eine Bestätigung von den anderen Leitweglenkungsschaltern zu erfordern, dass eine Verbindungsstatusmeldung empfangen wurde, und, wenn die Bestätigung nicht empfangen wurde, die Statusmeldung neu zu übertragen.

18. Leitweglenkungsschalter nach einem der vorstehenden Ansprüche, angeordnet, um Verkehr mit einer Rate über 1 Gigabit pro Sekunde zu verarbeiten.

19. Leitweglenkungsschalter nach Anspruch 1, wobei der eine oder die mehreren Prozessoren (46) angeordnet sind, um den Leitweglenkungsschalter zu steuern, um zu erkennen, ob eine oder mehrere erste Verbindungen, wenn damit Anbindung besteht, einem Qualitäts-Schwellenwert entsprechen, nachdem dem Qualitats-Schwellenwert nicht entsprochen wurde, und um Informationen an andere Leitweglenkungsschalter zu übertragen, um zu identifizierten, dass die eine oder die mehreren ersten Verbindungen jetzt dem Qualitäts-Schwellenwert entsprechen.

20. Verfahren, das von einem Kommumkationsnetz durchgeführt wird, in dem Knoten durch Verbindungsstrecken in einem ersten Ring und einem zweiten Ring verschaltet sind, das Verfahren umfassend:
automatisches Prüfen (1) der Qualität der Verbindungsstrecken zwischen Knoten,
Erkennen (2) durch einen ersten Knoten, ob eine oder mehrere erste Verbindungen einem Qualitäts-Schwellenwert nicht entsprechen;
Übertragen (3) von Informationen von dem ersten Knoten zu anderen Knoten, um die eine oder die mehreren ersten Verbindungen zu identifizieren;
Revidieren (5) einer Leitwegtabelle (47) in mindestens einigen der Knoten, um beeinträchtigten Verkehr derart umzuleiten, dass der umgeleitete Verkehr nicht die eine oder die mehreren ersten Verbindungen durchläuft, weil die eine oder die mehreren ersten Verbindungen fehlerhaft sind; und
Leiten von Verkehr durch einen Ausgangsknoten zu einem Zielknoten, basierend auf einer revidierten Leitwegtabelle (47) an dem Ausgangsknoten, um Verkehr, in einer Richtung um das Netz zu leiten, die von einer Richtung verschieden ist, die der Verkehr zu dem Zielknoten genommen hätte, wären die eine order die mehreren ersten Verbindungen nicht fehlerhaft gewesen;
**dadurch gekennzeichnet, dass**:
die Leitwegtabelle (47) revidiert wird, um einen Umleitungsweg zu erzeugen, indem eine Zahl von Abschnitten für den Verkehr zwischen einer Ausgangs- und einer Ziel-Vermittlungseinrichtung in dem Umleitungsweg, eine kumulative normalisierte Bitfehlerrate von der Ausgangs- und der Ziel-Vermittlungseinrichtung in dem Umleitungsweg und ein Grad der Verkehrsüberlastung zwischen der Ausgangs- und der Ziel-Vermittlungseinrichtung in dem Umleitungsweg berücksichtigt werden.

21. Verfahren nach Anspruch 20, wobei der Verkehr Informationen in einem Format in Übereinstimmung mit einem Protokoll umfasst.

22. Verfahren nach Anspruch 21, wobei die Informationen in der Form von Paketen sind.

23. Verfahren nach Anspruch 21, wobei die Informationen in der Form von Rahmen sind.

24. Verfahren nach Anspruch 21, wobei die Informationen in der Form von Zellen sind.

25. Verfahren nach einem der Ansprüche 20 bis 24, wobei einem Status einer Verbindung ein Qualitätswert zugeordnet wird und wobei der Übertragungsschritt umfasst:
Ändern des Qualitätswerts durch den ersten Knoten, um eine Änderung im Status der Verbindung aufgrund der Erkennung durch den ersten Knoten, dass die Verbindung nicht dem Qualitäts-Schwellenwert entspricht, anzuzeigen; und
Übertragen der Informationen, um die Verbindung sowie einen geänderten Qualitätswert zu identifizieren.

26. Verfahren nach Anspruch 25, die folgenden Schritte enthaltend:
Empfangen eines übertragenen Signals von dem ersten Knoten durch Knoten in dem Netz, wobei das übertragene Signal den geänderten Qualitätswert enthält; und als Reaktion darauf,
Revidieren einer Leitwegtabelle (47) in mindestens einigen der Knoten, um Verkehr umzuleiten, um zu berücksichtigen, dass die eine oder die mehreren ersten Verbindungen fehlerhaft sind.

27. Verfahren nach Anspruch 26, wobei die Leitwegtabelle (47) nicht revidiert wird, wenn der Qualitätswert der gleiche wie ein vorheriger Qualitätswert ist.

28. Verfahren nach einem der Ansprüche 20 bis 27, die folgenden Schritte enthaltend;
Zuordnen einer ersten Verkehrsklasse, die eine höhere Priorität als eine zweite Verkehrsklasse haben soll; und
Reduzieren der Kapazität, die der zweiten Verkehrsklasse zugeteilt wurde, wenn eine Reduzierung der Bandbreite des Netzes aufgrund der Revidierung der Leitwegtabelle (47) besteht.

29. Verfahren nach einem der Ansprüche 20 bis 28, den Schritt des Entfernens von Verkehr, der für Empfang durch einen Zielknoten bestimmt ist, aus dem Netz nach Empfang des Verkehrs durch den Zielknoten enthaltend.

30. Verfahren nach einem der Ansprüche 20 bis 29, wobei der erste Ring von Verbindungen in einer ersten Richtung um das Netz kommuniziert und der zweite Ring von Verbindungen in die entgegengesetzte Richtung um das Netz kommuniziert, das Verfahren weiter umfassend:
Leiten von Verkehr von einem Ausgangsknoten in dem ersten Ring in einer Richtung im Uhrzeigersinn zu einem oder mehreren Zielknoten; und
Leiten von Verkehr durch den Ausgangsknoten in dem zweiten Ring in einer Richtung entgegen dem Uhrzeigersinn zu einem oder mehreren Zielknoten,
und wobei Verkehr, der von einem Ausgangsknoten erzeugt und für einen einzelnen Zielknoten bestimmt ist, in Abhängigkeit von einen relativen Standort des Ausgangsknotens in Bezug auf den einzelnen Zielknoten in nur einer Richtung um das Netz übertragen wird.

31. Verfahren nach einem der Ansprüche 20 bis 30, wobei der Schritt des automatischen Prüfens der Qualität von Verbindungen zwischen Knoten umfasst:
Senden einer Adresse eines Ausgangsknotens zu einem angrenzenden Knoten entlang einer Verbindung und Erkennen der Qualität der Verbindung zwischen dem Ausgangsknoten und dem angrenzenden Knoten.

32. Verfahren nach Anspruch 31, wobei Erkennen der Qualität der Verbindung zwischen dem Ausgangsknoten und dem angrenzenden Knoten Erkennen einer Bitfehlerrate umfasst.

33. Verfahren nach Anspruch 31, wobei Erkennen der Qualität der Verbindung zwischen dem Ausgangsknoten und dem angrenzenden Knoten umfasst, zu erkennen, ob die Adresse empfangen wurde.

34. Verfahren nach Anspruch 31, wobei Erkennen der Qualität der Verbindung zwischen dem Ausgangsknoten und dem angrenzenden Knoten Erkennen eines Verlusts optischer Leistung durch einen optischen Empfänger in dem Knoten umfasst.

35. Verfahren nach einem der Ansprüche 20 bis 34, wobei Revidieren der Leitwegtabelle (47) umfasst:
Bestimmen, welche Leitwege zwischen Knoten **dadurch**, dass eine oder mehrere Verbindungen fehlerhaft sind, beeinträchtigt sind; und
Revidieren der Leitwegtabelle (47), um zu erzwingen, dass sämtlicher beeinträchtigter Verkehr in einer entgegengesetzten Richtung um den Ring geleitet wird.

36. Verfahren nach Anspruch 35, wobei Revidieren der Leitwegtabelle (47) unter Verwendung eines Algorithmus durchgeführt wird.

37. Verfahren nach Anspruch 35, wobei Revidieren der Leitwegtabelle (47) vorher berechnete Nachschlagetabellen verwendet.

38. Verfahren nach einem der Ansprüche 20 bis 37, wobei Übertragen durch den ersten Knoten weiter umfasst:
Übertragen einer Ausgangsknoten-Adresse des ersten Knotens und einer Kennung der fehlerhaften einen oder mehreren Verbindungen durch den ersten Knoten an andere Knoten in dem Netz nach Identifizierung, dass eine oder mehrere erste Verbindungen dem Qualitäts-Schwellenwert nicht entsprechen.

39. Verfahren nach Anspruch 38, wobei die Identifizierung einer oder mehrerer erster Verbindungen, die dem Qualitäts-Schwellenwert nicht entsprechen, eine Knotenadresse der Knoten am anderen Ende einer fehlerhaften Verbindung von dem ersten Knoten enthält.

40. Verfahren nach Anspruch 38, wobei die Identifizierung einer oder mehrerer fehlerhafter Verbindungen die Identifizierung einer physikalischen Schnittstelle, die die Anbindung einer fehlerhaften Verbindung mit dem ersten Knoten identifiziert, enthält.

41. Verfahren nach Anspruch 38, wobei Übertragen weiter umfasst, einen Verbindungsstatus, der den Grad der Verschlechterung der fehlerhaften einen oder der mehreren Verbindungen enthält, zu kommunizieren.

42. Verfahren nach Anspruch 41, wobei der Grad der Verschlechterung einen Status basierend auf einer gemessenen Bitfehlerrate identifiziert.

43. Verfahren nach einem der Ansprüche 20 bis 42, wobei die eine oder die mehreren ersten Verbindungen, die einem Qualitäts-Schwellenwert nicht entsprechen, dies aufgrund eines Knotenfehlers tun.

## Revendications

1. Commutateur de routage destiné à être utilisé dans un réseau de communication dans lequel une pluralité de commutateurs de routage est interconnectée par des liaisons de communication dans une première boucle et une seconde boucle, lequel commutateur de routage comporte:
un ou plusieurs émetteurs - récepteurs (30, 32) connectables à des liaisons de communication associées (34, 36) en vue d'une connexion à un ou plusieurs commutateurs de routage adjacents dans ledit réseau;
une table de routage (47);
une matrice de commutation (50) agencée pour router du trafic vers et depuis ledit un ou lesdits plusieurs émetteurs - récepteurs (30, 32) sur la base de la table de routage (47), et
un ou plusieurs processeurs (46) aptes à:
tester la qualité desdites liaisons de communication entre ledit un ou lesdites plusieurs commutateurs de routage adjacents;
détecter si une ou plusieurs premières liaisons desdites liaisons de communication ne satisfont pas au seuil de qualité;
transmettre des informations identifiant ladite une ou lesdites plusieurs premières liaisons du commutateur de routage à d'autres commutateurs de routage dans ledit réseau;
corriger ladite table de routage (47) pour réacheminer le trafic touché, de sorte que le trafic touché ne traverse pas ladite une ou lesdites plusieurs premières liaisons en raison de la défaillance desdites une ou plusieurs premières liaisons, et
router ledit trafic touché vers un noeud de destination, sur la base de ladite table de routage corrigée, dans une direction autour de ladite boucle différente d'une direction qu'il aurait parcouru vers ledit noeud de destination si ladite une ou lesdites plusieurs premières liaisons n'avaient pas été défaillantes;
**caractérisé en ce que**
la matrice de commutation (50) est agencée pour router le trafic vers et depuis ledit un ou lesdits plusieurs émetteurs récepteurs (30, 32) de sorte qu'en fonctionnement normal le trafic transite vers d'autres commutateurs de routage dans ledit réseau le long de la première boucle et de la seconde boucle; et
le processeur (46) est agencé pour corriger ladite table de routage (47) afin de créer un trajet de réacheminement en prenant en compte un nombre de sauts pour le trafic entre un commutateur source et un commutateur de destination sur ledit trajet de réacheminement, un taux d'erreur sur les bits cumulatif normalisé à partir du commutateur source et de destination sur ledit trajet de réacheminement et un niveau d'encombrement du trafic entre le commutateur source et de destination sur ledit trajet de réacheminement.

2. Commutateur de routage selon la revendication 1, dans lequel ledit un ou lesdits plusieurs processeurs (46) comportent un CPU collecté à la matrice de commutation (50).

3. Commutateur de routage selon la revendications 1 ou 2, dans lequel ledit un ou lesdits plusieurs processeurs (46) sont agencés pour commander au commutateur de routage de transmettre et recevoir périodiquement des messages de test vers et depuis des commutateurs de routage voisins dans ledit réseau et détecter la qualité de liaisons transportant de tels messages de test.

4. Commutateur de routage selon la revendication 3, dans lequel ledit un ou lesdits plusieurs processeurs (46) sont agencés pour commander au commutateur de routage de détecter la qualité desdites liaisons sur la base d'une comparaison d'un taux d'erreur sur les bits à un seuil.

5. Commutateur de routage selon la revendication 3, dans lequel ledit un ou lesdits plusieurs processeurs (46) sont agencés pour commander au commutateur de routage de détecter la qualité desdites liaisons en détectant une perte d'un signal optique.

6. Commutateur de routage selon la revendication 3, dans lequel ledit un ou lesdits plusieurs processeurs (46) sont agencés pour commander au commutateur de routage de détecter la qualité desdites liaisons en détectant une perte d'un signal électrique.

7. Commutateur de routage selon la revendication 3, dans lequel ledit un ou lesdits plusieurs processeurs (46) sont agencés pour commander au commutateur de routage de détecter la qualité desdites liaisons en détectant une perte d'une trame.

8. Commutateur de routage selon la revendication 1 ou 2, dans lequel ledit un ou lesdits plusieurs processeurs (46) sont agencés pour commander au commutateur de routage de recevoir des messages en provenance d'autres commutateurs de routage dans ledit réseau identifiant une liaison défaillante et corriger la table de routage (47) pour réacheminer le trafic.

9. Commutateur de routage selon la revendication 1 ou 2, dans lequel ledit un ou lesdits plusieurs processeurs (46) sont agencés pour commander au commutateur de routage de transmettre périodiquement des messages d'état de liaison avec un numéro de session, pour créer un nouveau numéro de session lorsqu'il a été détecté que ladite une ou lesdites plusieurs premières liaisons ne satisfont pas audit seuil de qualité, et pour transmettre l'identité de quelconques liaisons défaillantes avec ledit nouveau numéro de session à d'autres commutateurs de routage dans ladite boucle.

10. Commutateur de routage selon à revendication 9, dans lequel ledit un ou lesdits plusieurs processeurs (46) sont agencés pour commander au commutateur de routage de comparer un numéro de session transmis à un numéro de session stocké et, lorsque le numéro de session est différent, corriger la table de routage (47) afin de prendre en compte une liaison défaillante.

11. Commutateur de routage selon la revendication 10, dans lequel ledit un ou lesdits plusieurs processeurs (46) sont agencés pour commander au commutateur de routage de corriger ladite table de routage en vue d'identifier des routes optimales pour les destinations de trafic.

12. Commutateur de routage selon l'une quelconque des revendications précédentes, dans lequel ledit un ou lesdits plusieurs processeurs (46) sont agencés pour commander au commutateur de routage d'annexer un en-tête de routage à un message destiné à être transmis audit noeud de destination.

13. Commutateur de routage selon l'une quelconque des revendications précédentes, dans lequel ledit trafic comporte des paquets.

14. Commutateur de routage selon l'une quelconque des revendications 1 à 12, dans lequel ledit trafic comporte des cellules.

15. Commutateur de routage selon l'une quelconque des revendications précédentes, dans lequel ledit un ou lesdits plusieurs processeurs (46) sont agencés pour commander au commutateur de routage d'abandonner certains types de trafic en raison d'une bande passante réduite dans ledit réseau lorsque ladite une ou lesdites plusieurs premières liaisons sont défaillantes.

16. Commutateur de routage selon l'une quelconque des revendications précédentes, dans lequel ledit un ou lesdits plusieurs processeurs (46) sont agencés pour commander au commutateur de routage d'emballer trafic entrant faisant route vers une commutateur de routage avec une liaison défaillante autour d'une différente direction dans ledit réseau.

17. Commutateur de routage selon l'une quelconque des revendications précédentes, dans lequel ledit un ou lesdits plusieurs processeurs (46) sont agencés pour commander au commutateur de routage de demander un accusé de réception par lesdits autres commutateurs de routage indiquant qu'un message d'état de liaison a été reçu et, lorsque ledit accusé de réception n'a pas été reçu, de retransmettre ledit message d'état.

18. Commutateur de routage selon l'une quelconque des revendications précédentes, agencé pour traiter le trafic à une vitesse supérieure à 1 gigaoctet par seconde.

19. Commutateur de routage selon la revendication 1, dans lequel ledit un ou lesdits plusieurs processeurs (46) sont agencés pour commander au commutateur de routage de détecter si une ou plusieurs premières liaisons, lorsque connectées, satisfont à un seuil de qualité, auprès ne pas avoir satisfait audit seuil de qualité, et de transmettre des informatisons à d'autres commutateurs de routage pour identifier que ladite une ou lesdites plusieurs premières liaisons satisfont à présent audit seuil de qualité.

20. Procédé mis en oeuvre: par un réseau de communication dans lequel des noeuds sont interconnectés par des liaisons de communication dans une première boucle et une seconde boucle, lequel procédé comporte les étapes ci-dessous consistant à:
tester automatiquetnent (1) la qualité des liaisons de communication entre les noeuds;
détecter (2) par un premier noeud si une ou plusieurs premières liaisons ne satisfont pas à un seuil de qualité;
transmettre (3) des informations dudit premier noeud à d'autres noeuds pour identifier ladite une ou lesdites plusieurs premières liaisons;
corriger (5) une table de routage (47) dans au moins certains desdits noeuds pour réacheminer le trafic touché de sorte que le trafic réacheminé ne traverse pas ladite une ou lesdites plusieurs premières liaisons, en raison de la défaillance dcsditcs une ou plusieurs premières liaisons; et
acheminer le trafic par un noeud source à un noeud de destination, sur la base d'une table de routage corrigée (47) au niveau du noeud source, de façon à router le trafic dans une direction autour du réseau différente d'une direction que le trafic aurait emprunté vers le noeud de destination si ladite une ou lesdites plusieurs premières liaisons n'avaient pas été défaillantes;
**caractérisé en ce que**:
ladite table de routage (47) est corrigée pour créer une trajet de réacheminement en prenant en compte un nombre de sauts pour le trafic entre un commutateur source et un commutateur de destination sur ledit trajet de réacheminement, un taux d'erreur sur les bits cumulatif normalisé à partir du commutateur source et de destination sur ledit trajet de réacheminement, et un niveau d'encombrement du trafic entre le commutateur source et de destination sur ledit trajet de réacheminement.

21. Procédé selon la revendication 20, dans lequel le trafic comporte des informations dans un format selon un protocole.

22. Procédé selon la revendication 21, dans lequel les informations sont sous la forme de paquets.

23. Procédé selon la revendication 21, dans lequel les informations sont sous la forme de trames.

24. Procédé selon la revendication 21, dans lequel les informations sont sous la forme de cellules.

25. Procédé selon l'une quelconque des revendications 20 à 24, dans lequel un état d'une liaison reçoit une valeur de qualité, et dans lequel l'étape de transmission comporte les étapes consistant à:
modifier la valeur de qualité par le premier noeud pour indiquer une modification d'état de la liaison sous l'effet de la détection par ledit premier noeud que la liaison ne satisfait pas audit seuil de qualité; et
transmettre les informatisons pour identifie ladite liaison ainsi qu'une valeur de qualité modifiée.

26. Procédé selon la revendication 25, comportant les étapes consistant à:
recevoir par des noeuds dans le réseau un signal transmis à partir dudit premier noeud, le signal transmis comportant ladite valeur de qualité modifiée; et en réponse,
corriger une table de routage (47) dans au moins certains desdits noeuds pour réacheminer le trafic en vue de prendre en compte ladite une ou lesdites plusieurs premières liaisons défaillantes.

27. Procédé selon la revendication 26, dans lequel la table de routage (47) n'est pas corrigée lorsque ladite valeur de qualité est la même que la valeur de qualité précédente.

28. Procédé selon l'une quelconque des revendications 20 à 27, comportant les étapes consistant à:
désigner un première classe de trafic destinée à présenter une priorité supérieure à celle d'une seconde classe de trafic: et
réduire la capacité affectée à la seconde classe de trafic s'il existe une réduction de bande passante du réseau occasionnée par ladite correction de la table de routage (47).

29. Procédé selon l'une quelconque des revendications 20 à 28, comportant l'étape consistant à supprimer du réseau le trafic indiqué comme étant reçu par un noeud de destination après réception dudit trafic par ledit noeud de destination.

30. Procédé selon l'une quelconque des revendications 20 à 29, dans lequel la première boucle de liaisons communique dans une première direction autour du réseau et la seconde boucle de liaisons communique dans une direction inverse autour du réseau, le procédé comportant en outre les étapes consistant à:
acheminer le trafic d'un noeud source sur la première boucle dans le sens des aiguilles d'une montre à un ou plusieurs noeuds de destination; et
acheminer le trafic par le noeud source sur la seconde boucle dans le sens inverse des aiguilles d'une montre à un ou plusieurs noeuds de destination,
et dans lequel le trafic généré par un noeud source destiné à un noeud de destination unique est transmis dans une seule direction autour dudit réseau en fonction d'une localisation relative du noeud source relativement au noeud de destination unique.

31. Procédé selon l'une quelconque des revendications 20 à 30, dans lequel l'étape consistant à tester automatiquement la qualité de liaisons entre des noeuds comporte les étapes consistant à:
transmettre une adresse d'un noeud source à un noeud adjacent le long d'une liaison et détecter la qualité de la liaison entre le noeud source et ledit noeud adjacent.

32. Procédé selon la revendication 31, dans lequel l'étape de détection de la qualité de ladite liaison entre le noeud source et ledit noeud adjacent comporte l'étape consistant à détecter un taux d'erreur sur les bits.

33. Procédé selon la revendication 31, dans lequel l'étape de détection de la qualité de ladite liaison entre le noeud source et ledit noeud adjacent comporte l'étape consistant à détecter si ladite adresse a été reçue.

34. Procédé selon la revendication 31, dans lequel l'étape de détection de la qualité de ladite liaison entre ledit noeud source et ledit noeud adjacent comporte l'étape consistant à détecter une perte de puissance optique par un récepteur optique dans ledit noeud.

35. Procédé selon l'une quelconque des revendications 20 à 34, dans lequel l'étape consistant à corriger ladite table de routage (47) comporte les étapes consistant à:
déterminer quelles routes entre les noeuds sont touchées par ladite une ou plusieurs liaisons défaillantes; et
corriger la table de routage (47) pour forcer la totalité du trafic touché à être acheminée dans une direction inverse autour de ladite boucle.

36. Procédé selon la revendication 35, dans lequel l'étape consistant à corriger ladite table de routage (47) est mise en oeuvre en utilisant un algorithme.

37. Procédé selon la revendication 35, dans lequel l'étape consistant à corriger ladite table de routage (47) utilise des tables de consultations pré-calculées.

38. Procédé selon l'une quelconque des revendications 20 à 37, dans lequel la transmission par le premier noeud comporte en outre les étapes consistant à:
transmettre, par ledit premier noeud à d'autres noeuds dans le réseau après l'identification d'une ou plusieurs premières liaisons ne satisfaisant pas audit seuil de qualité, une adresse de noeud source dudit premier noeud et une identification de ladite une ou desdites plusieurs liaisons défaillantes.

39. Procédé selon la revendications 38, dans lequel l'identification d'une ou plusieurs premières liaisons qui ne satisfont pas audit seuil de qualité comporte une adresse de noeud des noeuds sur l'autre extrémité d'une liaison défaillante à partir du premier noeud.

40. Procédé selon la revendication 38, dans lequel l'identification d'une ou plusieurs liaisons défaillantes comporte l'étape consistant à identifier une interface physique identifiant la connexion d'une liaison défaillante au premier noeud.

41. Procédé selon la revendications 38, dans lequel l'étape de transmission comporte en outre l'étape consistant à communiquer un état de liaison comportant le niveau de dégradation de ladite une ou desdites plusieurs liaisons défaillantes.

42. Procédé selon la revendication 41, dans lequel le niveau de dégradation identifie un état sur la base d'un taux d'erreur sur les bits mesuré,

43. Procédé selon l'une quelconque des revendications 20 à 42, dans lequel ladite une ou lesdites plusieurs première liaisons qui ne satisfont pas au seuil de qualité le font en raison d'un dysfonctionnement de noeud.
